(19) Europäisches Patentamt

European Patent Office

Office européen des brevets

(11) Veröffentlichungsnummer: **0 536 438 B1**

(12) **EUROPÄISCHE PATENTSCHRIFT**

(45) Veröffentlichungstag der Patentschrift: **27.09.95**

(51) Int. Cl.⁶: **B29C 47/92**

(21) Anmeldenummer: **91117266.6**

(22) Anmeldetag: **10.10.91**

---

(54) **Verfahren zur gewichtsabhängigen Regelung des Grundspaltes an Extrusionsblasmaschinen.**

---

(43) Veröffentlichungstag der Anmeldung:
**14.04.93 Patentblatt  93/15**

(45) Bekanntmachung des Hinweises auf die
Patenterteilung:
**27.09.95 Patentblatt  95/39**

(84) Benannte Vertragsstaaten:
**AT BE CH DE DK ES FR GB GR IT LI LU NL SE**

(56) Entgegenhaltungen:
**EP-A- 0 026 828      EP-A- 0 251 135
EP-A- 0 334 449      WO-A-91/06418
DE-A- 3 536 329      DE-A- 3 935 338
GB-A- 2 221 642**

(73) Patentinhaber: **MOTECH GmbH COMPUTERGE-
STÜTZTE SYSTEM-LÖSUNGEN
Ortsstrasse 34 A
D-69469 Weinheim (DE)**

(72) Erfinder: **Morton-Finger, Jürgen
Ortsstrasse 34a
DE-6940 Weinheim (DE)**

(74) Vertreter: **Ratzel, Gerhard, Dr.
Seckenheimer Strasse 36a
D-68165 Mannheim (DE)**

---

Rank Xerox (UK) Business Services
(3. 10 / 3. 0 9 / 3. 3. 3)

## Beschreibung

Die vorliegende Erfindung betrifft ein Verfahren zur gewichtsabhängigen Regelung des Grundspaltes an Extrusionsblasmaschinen, gemäß dem Oberbegriff des Anspruchs 1.

Ein solches Verfahren kann der Fachmann der DE-A-39 35 338 entnehmen. Bei diesem Verfahren wird das Istgewicht dem Sollgewicht durch Veränderung den Spaltbreite angeglichen, und die dadurch geänderte Zykluszeit durch Korrektur der Extruderdrehzahl wieder zur Sollzykluszeit zurückgeführt.

Zum Stand der Technik ist ferner die DE-A-29 40 418 zu nennen, die ein Verfahren zur gewichtsabhängigen Regelung des Grundspaltes an Extrusionsblasmaschinen betrifft, bei dem die Zykluszeit gemessen, ein gemessener Gewichts-Ist-Wert mit einem vorgegebenen Gewichts-Soll-Wert verglichen, durch Veränderung der Wanddicke das Istgewicht dem Sollgewicht angeglichen wird, und die dadurch geänderte Zykluszeit über eine Korrektur der Extruderdrehzahl wieder zur Soll-Zykluszeit zurückgeführt wird.

Diese beiden oben beschriebenen Verfahren finden Verwendung bei der Herstellung von Extrusionsblaskörpern aus einer Schicht. Es handelt sich somit um Extrusionsblasverfahren für Einschichtenkörper-bzw. Formteile.

Die Verfahren des Standes der Technik erzielen eine weitgehende Präzisierung bzw. Stabilisierung der Wanddicke von Vorformlingen und bewirken demzufolge Erhöhungen der Qualität und Einsparungen an Material.

Die Verfahren gemäß dem Stand der Technik gestatten jedoch nicht, mittels Extrusionsblasmaschinen Mehrschichten-Blaskörper bzw. Mehrschichten-Formteile herzustellen, die in der Gesamtheit ihrer Schichten hohe Präzision der Schichtdickenstabilisierung, Einsparung von Material,präzise Abstimmung der einzelnen Schichten des Mehrschichtenkörpers erfordern.

Demgegenüber liegt vorliegender Erfindung die Aufgabe zugrunde, ein Verfahren zur gewichtsabhängigen Regelung des Grundspaltes bzw. der Grundspalte an Extrusionsblasmaschinen zu liefern, welches bei geregelter Zykluszeit bzw. Vorformlingslänge und Vorformlingswanddicke sowie konstantem Massedurchsatz, bzw. bei mehreren Schichten konstantem Massedurchsatz pro Schicht, ein konstantes Vorformlingsgewicht gewährleistet, wobei das Regelprinzip für eine Schicht auf mehrere, gegebenenfalls getrennt ansteuerbare Schichten Anwendung findet.

Diese Aufgabe wird erfindungsgemäß bei einem Verfahren der eingangs genannten Gattung dadurch gelöst, daß zum Herstellen von mehrschichtigen Vorformlingen für mindestens eine der Schichten jeweils zwei getrennt ansteuerbare Regelkreise aus Gewicht Q und Drehzahl V einerseits sowie aus Spaltbreite s und Zeit t andererseits vorliegen.

Eine besondere Ausführungsform des erfindungsgemäßen Verfahrens ist in Unteranspruch 2 beschrieben.

Es zeigte sich in überraschender Weise, daß es mit dem erfindungsgemäßen Verfahren möglich ist, eine Mehrzahl von Extrusionsschichten im Sinne einer Mehrschichtenextrusion mit der Präzision, wie sie bisher lediglich für Einschichtenkörper erzielbar war, für Mehrschichtenkörper anzuwenden, und dabei gegebenenfalls variable gezielte Schichtdicken, verschiedene Schichten-Materialien und weitestgehende Materialeinsparungen sowie hohe Qualität des entstehenden Mehrschichtenkörpers zu erzielen.

Das ursprüngliche Regelprinzip gemäß dem Stand der Technik, insbesondere gemäß DE-A-39 35 338, beinhaltet eine Relation bzw. Steuerung von Spaltbreite s zu Gewicht Q sowie anschließend zu Drehzahl bzw. Extrudergeschwindigkeit V.

Bei vorliegender Erfindung wurde diese ursprüngliche Kopplungsart aufgehoben bzw. modifiziert zu den gegebenenfalls unabhängig voneinander ansteuerbaren oder auch gezielt gleichzeitig bzw. zeitversetzt ansteuerbaren Regelkreisen Gewicht Q und Drehzahl V einerseits, sowie Spaltbreite s und Zeit t andererseits.

Es handelt sich bei vorliegender Erfindung somit um zwei Paare, zwei getrennte Regelkreise.

Die erfindungsgemäße neue Zusammenfassung der Regelkreise gestattet, verglichen mit dem Stand der Technik, eine Mehrschichtenextrusion, wobei mehrere Schichten in eine Behälterwand eingeführt, bzw. zu einer Behälterwand zusammengeführt werden; das erfindungsgemäße Verfahren ist insbesondere geeignet zur PVC-Substitution.

Bei den zusammengeführten Schichten kann es sich beispielsweise um Polyäthylen, einen Haftvermittler und um Polyacrylat handeln, die dann gemeinsam die Behälterwand bilden.
In der Kunststoffindustrie kommt die sogenannte Mehrschicht-Extrusion, auch Co-Extrusion genannt, immer mehr zum Einsatz.

Dieses Mehrschichtenextrusionsverfahren hat den Vorteil, die positiven Materialeigenschaften mehrerer Materialien in einem Produkt zu kombinieren.

So besteht z.B. die Möglichkeit, einen Hohlkörper zum Transport von Säuren mit einem säurebeständigen Innenmaterial herzustellen, wobei zur Erhöhung der Festigkeit die mittlere Schicht aus einem Recycling-Material besteht, bzw. bestehen kann, und die äußere Schicht beispielsweise ein UV-stabilisiertes Material sein kann.

Damit werden Formkörper hergestellt, die verschiedensten industriellen oder umweltbedingten Anforderungen besser gerecht werden als Einschichtenkörper.

Beim erfindungsgemäßen Verfahren ist es nun möglich, eine weitere Steigerung der Effizienz der Qualität und der Umweltschonung zu erreichen, indem aufgrund der präziseren Schichtendicke und der Einsparung des Materials geringere Toleranzen bei Schichten möglich sind und beispielsweise Mehrschichtenkörper aus bisher nicht nutzbaren Einzelschichtenkombinationen möglich werden.

Die im nachfolgenden näher beschriebene Erfindung ermöglicht nun die exakte und reproduzierbare Herstellung solcher Mehrschichtenhohlkörper im Blasformverfahren.

Es erfolgt somit:

1. Eine Soll-Wert-Vorgabe der Zykluszeit für einen Vorformling,

2. Die Soll-Wert-Vorgaben für die Sollgewichte der einzelnen Schichtmaterialien pro Vorformling,

3. aus 1. und 2. wird der Sollmassedurchsatz pro Schichtmaterial errechnet,

4. mittels Waagen werden die über die Materialtrichter zugeführten Massedurchsätze erfasst,

5. und mit den in 3. errechneten Sollmassedurchsätzen verglichen.

6. Ergibt sich eine Abweichung der Ist-Massedurchsätze zu den Soll-Massedurchsätzen pro Schichtmaterial, so erfolgt über die Korrektur der Extruder-Drehzahl des jeweiligen Extruders eine Angleichung.

7. Die daraus resultierende Änderung der Schlauchaustrittsgeschwindigkeit und somit auftretende Veränderung der Zykluszeit, wird durch die Korrektur des Grundspaltes der Wanddikkenprogrammierung kompensiert.

Diese Maßnahmen finden in koordinierter, bzw. gegebenenfalls abgestimmter Form für die verschiedenen Schichten, bzw. die verschiedenen Spalten statt und ermöglichen dadurch die sprunghaft gesteigerte Verbesserung des Mehrschichten-Extrusionsblasverfahrens.

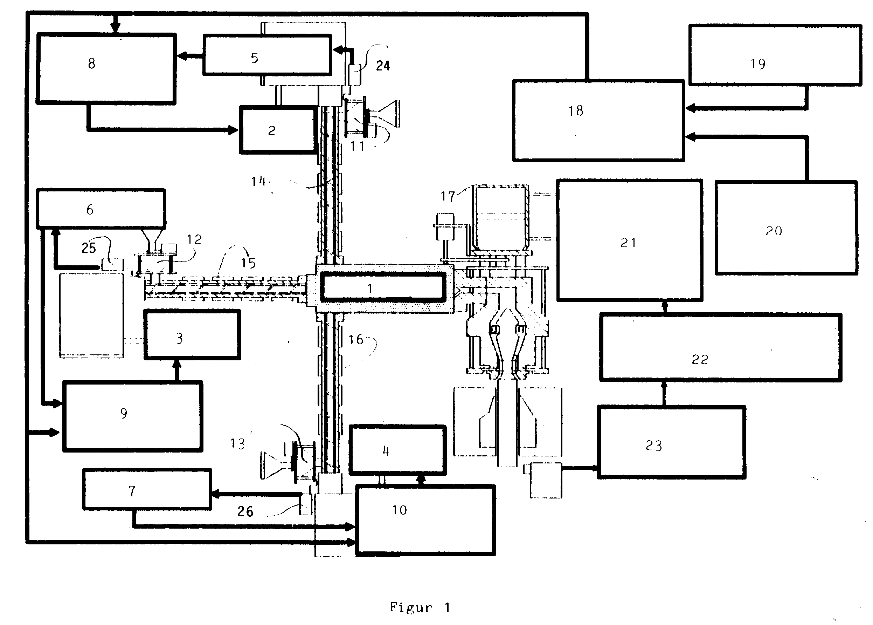

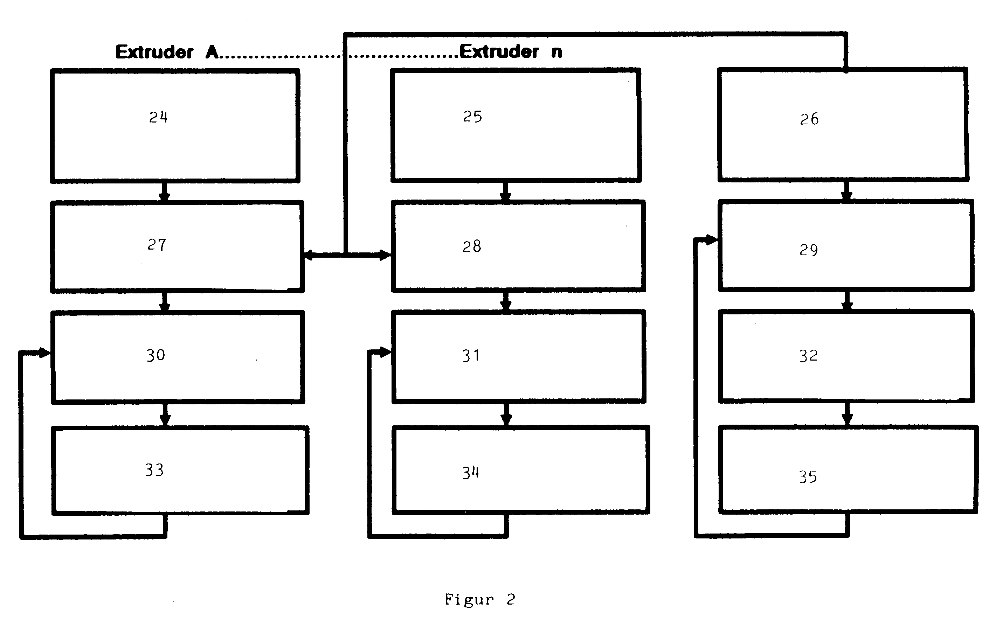

Die Erfindung wird weiterhin anhand der Figuren 1 und 2 weiter erläutert, wobei die Figur 1 die gewichtsabhängige Vorformlingsregelung am Beispiel einer Dreischichten-Blasformanlage zeigt, und die Figur 2 ein Blockschaltbild der gewichtsabhängigen Vorformlingsregelung bei Mehrschichtextrusion beinhaltend Extruder A bis Extruder n, darstellen.

Dabei zeigt die Figur 1 einen zentralen Blaskopf der über einen Verteilerkopf von drei Extrudern mit Material versorgt wird, wobei diese drei Extruder separate Antriebsmotoren für die Schnekke, separate Ermittlung des Durchsatzes an Material, separate Regelung der Extruderdrehzahl in Abhängig von Soll- und Istdurchsatz, mittels einer entsprechenden Logik ermöglicht. Das Wanddikkenprogrammiersystem mit elektrohydraulischem Servosystem, ermöglicht eine Nachregelung des Grundspaltes in Abhängigkeit von der Zykluszeit, die mittels einer Fotozelle ermittelt wird.

Dabei zeigt die Figur 1 im einzelnen einen Verteilerkopf 1, drei Extruder 14, 15 und 16, mit Dosierwaagen 24, 25, 26 Zuführbehälter 11, 12, 13, Antriebsmotoren für Schnecke 2, 3, 4, Ermittlungsvorrichtungen 5, 6, 7 des Materials für jeweils Extruder 14, 15 und 16, Regelungsvorrichtungen 8, 9, 10 der Extruderdrehzahlen der Extruder 14, 15, 16 in Abhängigkeit von Soll- und Ist-Durchsatz.

Weiterhin zeigt die Figur 1 einen Hydraulikzylinder 17, eine Berechnungseinheit 18 des Soll-Massen-Durchsatzes für Material für die Extruder 14, 15, 16, eine Gewichtvorgabeeinheit 19 für Schichtmaterial pro Vorformling, eine Eingabeeinheit 20 der Sollzykluszeit für einen Vorformling, ein Wanddikkenprogrammiersystem 21 mit elektrohydraulischem Servosystem, eine Sollwertvorgabeeinheit 22 für den Grundspalt berechnet aus Sollzyklus- und Istzykluszeit, sowie eine Erfassungseinheit 23 der Ist-Zykluszeit mittels Fotozelle.

Insgesamt stellt die Figur 1 eine schematische Darstellung einer gewichtsabhängigen Vorformlingsregelung am Beispiel einer Dreischichten-Blasformanlage dar.

Die Figur 2 zeigt für jeden Extruder A bis gegebenenfalls Extruder n in schematischer Weise die verschiedenen Maßnahmen, wie Eingabe des Soll-Wertes des Schichtmaterials A, Errechnen des Soll-Massedurchsatzes für Material A, Regelung der Extruderdrehzahl A und die Erfassung des Masse-Ist-Durchsatzes für Extruder A mittels Waage, wobei diese Regelkette, bzw. dieser Regelkreis verbunden ist mit der Eingabe der Sollzykluszeit für einen Vorformling, der Regelung des Grundspaltes g, der Veränderung der Schlauchgeschwindigkeit und dem Erfassen der Ist-Zykluszeit mittels Fotozelle, und dies für alle Extruder von A bis n.

Die Figur 2 stellt insgesamt ein Blockschaltbild der gewichtsabhängigen Vorformlingsregelung bei Mehrschichtextrusion bei Extrudern A bis n dar. Dabei liegt vor eine Eingabe 24, 25 des Sollwertes für das Gewicht des Schichtmaterials des Extruders A (ws A) pro Vorformling bzw. des Sollwertes für das Gewicht des Schichtmaterials des Extruders n (wsn) pro Vorformling, und eine Eingabe 26 der Sollzykluszeit für einen Vorformling (wt).

Weiterhin liegt vor eine Errechnungseinheit 27 bzw. eine Errechnungseinheit 28 für das Errechnen des Soll-Massedurchsatzes für das Material des Extruders A wm A = f (ws A, wt) bzw. des Soll-Massedurchsatzes für das Material des Extruders n wm n = f (wsn, wt) sowie eine Regelung 29 des Grundspaltes g = f (wt, xt).

Weiterhin zeigt die Figur 2 eine Regelungseinheit 30 bzw. eine Regelungseinheit 31 der Extruderdrehzahl des Extruders A, e A = f (wm A, xm A) bzw. der Extruderdrehzahl des Extruders n, e n = f (wmn, xmn) sowie eine Veränderungsregelung 32 der Schlauchgeschwindigkeit.

Weiterhin zeigt die Figur 2 eine Erfassungseinheit 33 bzw. eine Erfassungseinheit 34 des Masse-Ist-Durchsatzes des Extruders A mittels Waage (xm A) bzw. des Masse-Istdurchsatzes des Extruders n mittels Waage (xmn) sowie eine Erfassungseinheit 35 der Istzykluszeit mittels Fotozelle (xt).

**Patentansprüche**

1. Verfahren zur gewichtsabhängigen Regelung des Grundspaltes an Extrusionsblasmaschinen, bei dem das Istgewicht mit dem Sollgewicht des Vorformlings verglichen und die Spaltbreite variiert wird, wobei die Zykluszeit gemessen wird, der Massedurchsatz ermittelt wird, das Istgewicht des Vorformlings aus der gemessenen Zykluszeit und dem ermittelten Massedurchsatz errechnet wird, dieses Istgewicht mit einem vorgegebenen Sollgewicht verglichen wird, und das Istgewicht dem Sollgewicht sowie die gemessene Zykluszeit der Sollzykluszeit durch Korrektur der Extruderdrehzahl und Veränderung der Spaltbreite angeglichen werden,
dadurch gekennzeichnet,
daß zum Herstellen von mehrschichtigen Vorformlingen für mindestens eine der Schichten jeweils zwei getrennt ansteuerbare Regelkreise aus Gewicht und Extruderdrehzahl einerseits sowie aus Spaltbreite und Zykluszeit andererseits vorliegen.

2. Verfahren nach Anspruch 1,
dadurch gekennzeichnet,
daß die getrennte Ansteuerung mittels eines programmier - baren Mikroprozessors erfolgt.

**Claims**

1. A method for the weight-dependent control of the basic clearance in extrusion blow moulding machines, in which the actual weight is compared with the desired weight of the preform and the clearance width is varied, wherein the cycle time is measured, the mass flow is determined, the actual weight of the preform is calculated from the measured cycle time and the determined mass flow, this actual weight is compared with the predetermined desired weight, and the actual weight is matched to the desired weight and also the measured cycle time is matched to the desired cycle time by correcting the extruder speed of rotation and by varying the clearance width, characterised in that for the production of laminated preforms for at least one of the layers in each case there are provided two control circuits separately activatable by weight and extruder speed of rotation, on the one hand, and by clearance width and cycle time, on the other hand.

2. A method according to Claim 1, characterised in that the separate activation is effected by means of a programmable microprocessor.

**Revendications**

1. Procédé pour régler, en fonction du poids, l'écartement de base sur des machines d'extrusionsoufflage, dans lequel le poids réel de la préforme est comparé au poids de consigne et la largeur de l'écartement est modifiée, le temps de cycle étant mesuré, le débit de la masse étant déterminé, le poids réel de la préforme étant calculé à partir du temps de cycle mesuré et du débit de la masse déterminé, ce poids réel étant comparé à un poids de consigne prédéterminé et le poids réel étant aligné sur le poids de consigne, le temps de cycle mesuré étant également aligné sur le temps de cycle de consigne, par une correction de la vitesse de rotation de l'extrudeuse et par une modification de la largeur de l'écartement,
caractérisé en ce qu'il est prévu, pour la fabrication de préformes à plusieurs couches, pour au moins l'une des couches chaque fois deux circuits de réglage à commande séparée, pour le poids et la vitesse de rotation de l'extrudeuse d'une part, et pour la largeur de l'écartement et le temps de cycle d'autre part.

2. Procédé selon la revendication 1,
caractérisé en ce que la commande séparée est effectuée au moyen d'un microprocesseur programmable.

Figur 1

Extruder A..........................Extruder n

| 24 | 25 | 26 |

| 27 | 28 | 29 |

| 30 | 31 | 32 |

| 33 | 34 | 35 |

Figur 2